# EUROPEAN PATENT APPLICATION

(11) **EP 3 326 500 A1**
(43) Date of publication of application: **30.05.2018**
(21) Application number: 16201173.8
(22) Date of filing: 29.11.2016
(51) Int. Cl.: A47J 31/41

(54) **PROCESS FOR PREPARING FLAVOURED AND LAYERED BEVERAGES**

(71) Applicant: Nestec S.A., 1800 Vevey (CH)
(72) Inventor: VIKY, Gaylord, 25370 SAINT-ANTOINE (FR); ELLIOTT, Gareth, 1400 YVERDON-LES-BAINS (CH); FRIEH, Laurent, 25300 PONTARLIER (FR); MANSER, Daniel, 3700 SPIEZ (CH)
(74) Representative: Ducreux, Marie

(57) **Abstract**

The invention concerns a process of preparation of a beverage, said beverage being composed of at least two different layers, said layers presenting different densities, said process comprising the steps of separately preparing and successively delivering in one drinking container different beverage components,
wherein, during the preparation or the delivery of each beverage component, at least one additional flavour is introduced in the beverage component, and
wherein, for each beverage component, at least one additional flavour introduced in said beverage component is different from the additional flavour(s) introduced in the other beverage component(s).

## Description

### Field of the invention

The present invention relates to the preparation of beverages in a drinking container, the beverages visually presenting different superposed layers.

### Background of the invention

Beverage with layers of different natures are known from the state of the art, especially in the field of coffee and milk beverages like cappuccino or latte macchiato. These layered beverages present a nice visual aspect and a particular feeling during drinking due to the difference of densities and tastes of the layers.

In the field of beverages, it is also known to add additional flavours to basic beverages in order to increase the sensations and to enable the consumers to customize their beverages. For example, WO 2006/058692 or US 2009/0214742 describe processes to flavour a beverage with a concentrate by adding a flavouring additive to the beverage during the dispensing of said beverage.

In this area of beverages flavouring, WO 2006/135864 describes an apparatus for preparing foamed milk based beverages, wherein a flavouring additive is introduced in the foamed milk. The apparatus enables the preparation of beverages like cappuccino by preparing a coffee one side and preparing a flavoured foamed milk on another side and delivering the coffee and the flavoured foamed milk in a cup. Flavours are added in the milk only, and specifically during the foaming of the milk. The flavours are selected in the usual list of flavours for cappuccino like : vanilla, Irish crème, almond, rhum, orange, hazelnut, mint, chocolate.

An object of the present invention is to provide a process to produce new types of layered beverages increasing the drinking sensations of the consumers.

### Summary of the invention

In a first aspect of the invention, there is provided a process of preparation of a beverage, said beverage being composed of at least two different layers,
said layers presenting different densities,
said process comprising the steps of separately preparing and successively delivering in one drinking container different beverage components,
wherein, for each beverage component, during the preparation or the delivery of said beverage component, at least one additional flavour is introduced in the beverage component, and
wherein, for each beverage component, at least one additional flavour introduced in said beverage component is different from the additional flavour(s) introduced in the other beverage component(s).

The beverage prepared by the process comprises at least two different layers, said layers presenting different densities. Accordingly, the beverage comprises at least two layers stacked one about the other, the upper layer(s) presenting a lower mass fraction than the lower layer(s).
The difference of densities can be due to the difference of the quantity of air bubbles in the layers, that is depend on the fact the layer is a foam or not or depend on the gas volume fraction of the foam.
The difference of densities can also be due to a difference of nature of the layers. Usually the difference of nature means that the layers are prepared from different soluble beverage ingredients. For example, in a latte macchiato, coffee may not mix with the layer of milk. The difference of nature means also difference of concentration of layers of the same product, for example, the layers can be prepared from the same soluble beverage ingredient dissolved at different concentrations.
The difference of densities of the layers can also be due to a difference of temperature of the layers (for example hot and cold milks).

According to the preferred embodiment, the beverage comprises at least two different layers, the top layer being a foam and the lower layer(s) being liquid.
Preferably the top layer is a milk foam and the lower layer(s) is/are aqueous fluid(s). The aqueous fluid can be coffee, chocolate, milk or mixtures thereof. It is preferably coffee, milk or a mixture thereof.

The process comprises the steps of separately preparing the different beverage components.
Preferably the different beverage components are prepared just before being delivered in the drinking container. By preparation different meaning are intended. The preparation can cover at least :
- the production of a beverage component (like coffee),
- the production and the foaming of a beverage component (like milk issued from milk powder), or
- the foaming of an existing beverage component (like fresh milk).
The beverage component can be prepared by :
- dissolution of a soluble beverage powder or beverage concentrate with an aqueous fluid, preferably water,
- brewing of an infusable beverage ingredient like roast and ground coffee,
- infusion of infusable beverage ingredient like tea leaves, herbal tea,
- foaming of a beverage like milk.
Foaming can happen simultaneously to dissolution. For example, whipping of milk powder and water usually produces a mixture of milk and milk foam.
At least one prepared beverage component comprises foam and at least one prepared beverage component comprises liquid so that layers can be obtained in the drinking container. Frequently the beverage component comprising foam comprises liquid also ; it is usually a mixture of milk and milk foam.

According to one specific mode, at least one of the beverage components can be stored and directly delivered in the drinking container. For example, coffee can be brewed in large quantities and used on demand according to the present process. This embodiment is less preferred. Usually the beverage components are prepared just before being delivered in the drinking container.

According to the preferred embodiment, the process comprises the steps of preparing at least two beverage components, one first beverage component being at least partially foamed and the other beverage component(s) being liquid.
Accordingly, the introduction of both beverage components in the drinking container creates a layered beverage, the foam of the first beverage component forming the top layer of the beverage.
Preferably the different beverage components are selected in the list of : coffee, milk, foamed milk, chocolate, foamed chocolate and mixtures thereof.

Once prepared, the beverage components are successively delivered in the drinking container. These successive deliveries enable the creation of layers in the drinking container. Each layer does not systematically correspond to a beverage component. One layer can comprise a mixture of parts of different beverage components (like a mixture of coffee and the liquid milk part of a foamed milk) or can comprise a part only of one beverage component (like the foam part of a foamed milk).
When the process comprises the steps of preparing at least two beverage components, one first beverage component being at least partially foamed and the other beverage component(s) being liquid, the first beverage component comprising the foam is usually dispensed first in the drinking container. Then, preferably, a pause happens before the second beverage component is dispensed.
In the case of a beverage comprising a foam of milk, preferably foamed milk is dispensed first and the second beverage component, preferably coffee, is dispensed in a second step. Accordingly the velocity of coffee flow is decreased while it is dispensed through the foam and this effect prevents the mixing of layers. Coffee dispensed very slowly through a very dense foam of milk even enables the preparation of a three layers beverage comprising from the bottom to the top : a layer of milk, a layer of coffee and a layer of milk foam. Preferably the coffee is dispensed at a velocity of at most 120 cm/s.

During the preparation or delivery of each beverage component, at least one additional flavour is introduced in the beverage component. Accordingly each beverage component becomes flavoured.
The introduction of the additional flavour can happen during the beverage component preparation. This implementation is less preferred because traces of additional flavour(s) may remain in the device of preparation and affect the taste of other beverage components further prepared in this device, even after a rinsing.
Preferably the introduction of the additional flavour happens during the delivery of the beverage component. The introduction can be obtained by nozzles configured for introducing the additional flavour(s) in the flow of beverage component emerging from a dispensing outlet in order to avoid traces of flavour(s) in the device delivering the beverage component. Preferably, the nozzles do not contact the flow of beverage component but are oriented in order to dispense drops of flavour so that they fall inside the flow of beverage component.

At least one additional flavour is introduced in each beverage component and this additional flavour is different from the additional flavour(s) introduced in the other beverage component(s).
Preferably, only one additional flavour is introduced in each beverage component, and accordingly, each beverage component comprises one additional flavour different from the other beverage component(s).
Less preferably, several additional flavours can be introduced in each beverage component, yet, through these several additional flavours, at least one (preferably all) is different from the additional flavours introduced in the other beverage component(s).
Consequently, once all the beverage components have been introduced in the drinking container, each layer differs from the others by the presence of one or several different additional flavours.

Accordingly, when the beverage is drunk, a new dimension of feeling is provided because the consumer does not only feel a difference of densities through the different layers, he/she can also feel a succession of different flavours. The drinking sensation is increased. Moreover, it has been surprisingly noticed that when drinking a flavoured beverages produced with a top layer of milk foam and a liquid layer of coffee and milk, the consumer does not perceive the flavour added to milk in the liquid layer of milk and coffee : in that layer, he/she perceives the flavour added to coffee only. Accordingly there is a sharp difference of sensation of flavours for the customer when drinking the different layers, which was not expected.

According to one embodiment, the at least one additional flavour introduced in each beverage component is selected in a list of additional flavours compatible with said beverage component by foodpairing. By "additional flavour compatible with the beverage component by foodpairing", it is understood that said additional flavour comprises one major flavour component that is the same as one of the major flavour components of said beverage component.
According to the preferred embodiment one beverage component is coffee and the at least one additional flavour introduced in coffee and compatible with coffee by foodpairing can be selected in the list of : tangerine, coriander, mango, vanilla, caramel, peppermint, jasmine, ginger, hazelnut, orange, blackberry, almond, fig, toffee. These flavours can vary with each type of coffee, the origin of the coffee beans and the method the coffee has been roasted and then prepared.
According to the preferred embodiment, one beverage component is foamed milk and the at least one additional flavour introduced in foamed milk and compatible with foamed milk by foodpairing is selected in the list of : saffron, honey, cinnamon, lemon, caramel, vanilla, coconut, biscuit, nuts, coffee, chocolate, berries. These flavours can vary with each type of milk (full fat, skimmed, half skimmed) and the origin of the milk.

Preferably, the different additional flavours introduced in the different beverage components of a same beverage are compatible one with the others by foodpairing. By "additional flavour compatible with other additional flavours by foodpairing", it is understood that the additional flavours present at least one common flavour component.
According to the preferred embodiment, the beverage is prepared from coffee and foamed milk and the at least one first additional flavour introduced in coffee and the at least one second additional flavour introduced in foamed milk form a pair of flavours compatible by foodpairing. For example such pair of flavours can be selected in the following list:
- green apple flavour and rhubarb flavour, green apple flavour being added to coffee and rhubarb flavour being added to foamed milk,
- coconut flavour and passion fruit flavour, coconut flavour being added to coffee and passion fruit flavour being added to foamed milk,
- caramel flavour and orange flavour, caramel being added to coffee and orange flavour being added to foamed milk,
- chai flavour and mango flavour, chai being added to coffee and mango flavour being added to foamed milk.

Preferably, the beverage comprises at least one layer of milk foam and said milk foam is dense and thick to prevent a flow of coffee from mixing with milk foam during the introduction of said coffee in foamed milk. Such a foam avoids the mixing of layers because this foam decreases the speed of coffee flow or other liquid beverage flows passing through the foam. Accordingly this flow is gently dispensed under the foam and, moreover, the mixing with another liquid layer present under the milk foam, in particular liquid milk, can be even limited. Preferably the beverage comprises at least one layer of milk foam, said milk foam being produced by mechanical whipping or steam foaming. It has been observed that such processes enable the production of milk foam with the above required preferred features. By mechanical whipping, it is understood :
- the whipping of milk or a mixture of milk concentrate or milk powder with water by means of a mechanical device like a whipper or blades in a mixing chamber.
- device configured for producing a Taylor-Couette flow effect on milk.
By steam foaming, it is understood the introduction of steam in milk until foam is produced, in particular by introduction of steam in milk.
These technologies can provide microfoam having bubbles so small that they can hardly be seen, which results in a very dense foam.
According to one preferred embodiment, the milk foam can present :
- a gas volume fraction of at least 60 % in weight,
- a yield stress of at least 9 Pa,
- a height of foam of at least 15 mm.

Preferably the beverage is selected in the list of cappuccino, latte macchiato, chocolate with a top layer of milk foam.

According to a second aspect there is provided a beverage comprising at least two different layers, preferably two only, said layers differing by their densities and their beverage compositions and said layers comprising additional flavours, wherein the layers differ by the presence at least one different additional flavour.

Preferably, the different additional flavours of the different layers are compatible one with the others by foodpairing and the additional flavours are selected in a list of additional flavours compatible with said beverage component by foodpairing.

Preferably the beverage comprises at least one layer of milk foam and said milk foam presents :
- a gas volume fraction of at least 60 % in weight,
- a foam height of at least 20 mm,
- a yield stress of at least 9 Pa.

Preferably the beverage comprises :
- one top layer comprising milk foam, and
- one layer comprising at least coffee,
and the at least one first additional flavour of milk and the at least one second additional flavour introduced in the coffee are compatible by foodpairing.

Preferably the beverage is the result of a mixture of foamed milk and coffee in a ratio in volume of about 2 to about 3 parts of milk for 1 of coffee.

According to a third aspect there is provided an apparatus for preparing a beverage, said beverage being composed of at least two different layers, said layers presenting different densities,
said apparatus comprising :
- a first beverage unit for preparing a first beverage component, preferably foamed milk, and dispensing a flow of said first beverage component in a drinking cup,
- a second beverage unit for preparing a second beverage component, preferably coffee, and dispensing a flow of said second beverage component in said drinking cup,
- a flavour unit comprising a plurality of additional flavours storing units, corresponding pumping means and lines for dispensing said additional flavours separately, said dispensing lines being configured for dispensing the additional flavours in the flows of the first and the second beverage component,
- a control unit controlling the first beverage unit, the second beverage unit and the flavour unit so that:
   - when the first beverage component is dispensed in the drinking cup, at least one first additional flavour is introduced in the flow of said first beverage component, then
   - when the second beverage component is dispensed in the drinking cup, at least one second additional flavour is introduced in the flow of said second beverage component, said at least second additional flavour being different from said at least one first additional flavour.

Such an apparatus enables the preparation of a beverage such as described above according to the process such as described above.
Such an apparatus enables the preparation of a layered beverage and guarantees that different flavours are present in the different layers.

Preferably the first beverage unit is comprised in the list of the following units :
- a milk beverage unit configured for foaming milk with steam,
- a milk beverage unit comprising a mixing bowl and a mechanical whipper to whip milk or a mixture of milk powder or milk concentrate with water.

The second beverage unit can be :
- a beverage unit comprising a mixing bowl and a mechanical whipper to whip a soluble beverage powder or a beverage concentrate with water, or
- brewing chamber configured to receive an infusable beverage ingredient and hot water, or
- a storing unit to keep a beverage that has been previously prepared.

The apparatus can comprise several second beverage units in order to increase the variety of proposed beverages (for example coffee, decaffeinated coffee, chocolate, juices, tea).

Either for the first or the second beverage unit, a beverage unit comprising a mixing bowl and a mechanical whipper usually comprises :
- at least one storing unit to store the soluble beverage powder or concentrate, and
- a corresponding dosing unit to dispense a dose of powder or concentrate from said storing unit in the mixing bowl.

Typically the apparatus comprises a supply of water and a pump to dispense the water to the beverage units.

The apparatus can comprise heating or cooling units to heat, respectively, cool water and/or fresh or concentrate milk if necessary.

In the present application, the soluble beverage powder can be instant coffee powder, chocolate powder, milk powder, instant tea powder, a fruit powder, a soup powder, ...

In the present application, the beverage concentrate can be coffee concentrate, milk concentrate, tea concentrate, a syrup.

Preferably the flavour unit comprises nozzles at the outlet of the lines dispensing the additional flavours and said nozzles are oriented in order to dispense drops of additional flavours inside the flows of the beverage components.
Preferably, the nozzles do not contact the flow of beverage component but are oriented in order to dispense drops of flavour so that they fall inside the flow of beverage component.

In the present application, by "major flavour component" of a product, it is meant a flavour component present in said product in concentration higher than its specific flavour threshold, that is to say in sufficiently high concentration to be able to interact with one or more human olfactory receptors.

In the present application, in a brewing chamber, hot water infuses and extracts flavours from the brewing ingredient. The brewing chamber can contain a filter to allow beverage to drain from the infused beverage ingredient and hot water mixture. In one embodiment, it can be configured to be hermetically closed to receive and hold hot water under pressure and to retain the infusable beverage ingredient. In other embodiments, such a pressure is not necessary. The infusable beverage ingredient can be roast and ground coffee, tea leaves, herbs, botanicals, as well as other substances.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

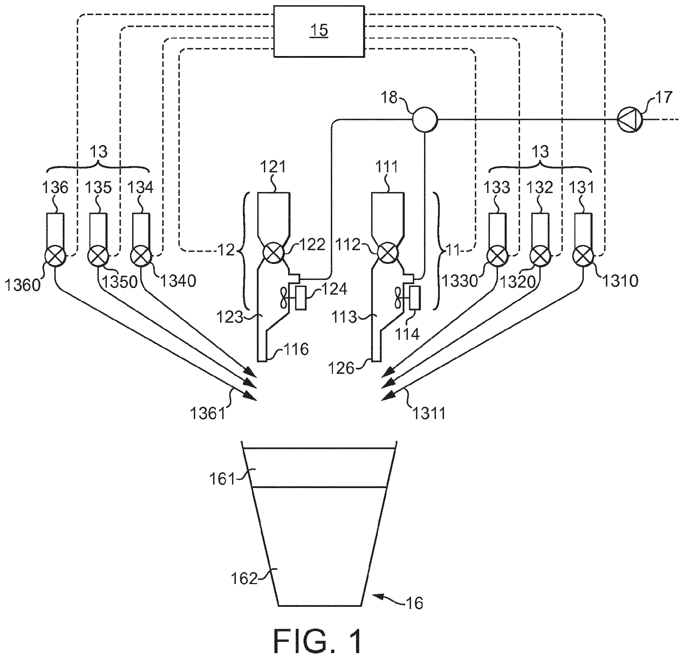

The characteristics and advantages of the invention will be better understood in relation to Figure 1 which is a schematic view of a beverage dispensing apparatus according to the present invention.

### Detailed description of the drawings

Figure 1 illustrates a beverage dispensing apparatus 1 said apparatus comprising a first beverage unit 11 for preparing a first beverage component, preferably foamed milk, and dispensing a flow of said first beverage component in a drinking cup 16. This first beverage unit 11 can prepare foamed milk from milk powder as illustrated. This unit 11 comprises a storing container 111 of milk powder, dosing means 112 for measuring a dose of milk powder and a mixing chamber 113 in which the dose of milk powder can be introduced and mixed with water. Water is introduced through a diluent inlet 115 and water and milk can be mixed by a whipper actuated by a motor 114. A dispensing line delivers the first beverage component from the mixing unit in the drinking cup 16.

Alternatively, the first beverage unit can prepare foamed milk with steam.

The apparatus comprises a second beverage unit 12 for preparing a second beverage component, preferably coffee, and dispensing a flow of said second beverage component in the drinking cup 16. This second beverage unit 12 can prepare coffee from instant coffee powder as illustrated. This unit 12 comprise a container 121 of instant coffee powder, dosing means 122 for measuring a dose of instant coffee powder and a mixing chamber 123 in which the dose of coffee powder can be introduced and mixed with water. Water is introduced through a diluent inlet 125 and water and coffee can be mixed by a whipper actuated by a motor 124. A dispensing line delivers the second beverage component from the mixing unit in the drinking cup 16.

Alternatively, the second beverage unit can prepare beverage by any other methods or store a beverage that has already been prepared.

A pump 17 dispenses water to the mixing chambers 113, 123 of the beverage units. A valve 18 enables feeding water in one chamber or the other.

The apparatus comprises a flavour unit 13 comprising a plurality of additional flavours storing units 131, 132, 133, 134, 135, 136. Each storing unit communicates with a corresponding pumping means 1310, 1320, 1330, 1340, 1350, 1360 and lines for dispensing each additional flavours separately. The dispensing lines are configured for dispensing the additional flavours in the flows of the first or the second beverage components when said flows emerge from the respective outlets 116, 126 of the mixing chambers. Nozzles 1361, 1311 can be present at the end of the dispensing lines in order to orientate the flavours in the flows of beverage components.

The apparatus comprises a control unit 15 for controlling the first beverage unit 11, the second beverage unit 12 and the flavour unit 13 so that:
- when the first beverage component is dispensed in the drinking cup 16, at least one first additional flavour is introduced in the flow of said first beverage component, then
- when the second beverage component is dispensed in the drinking cup 16, at least one second additional flavour is introduced in the flow of said second beverage component, said at least second additional flavour being different from the at least one first additional flavour. Practically, first, the control unit sequentially controls :

- in the first beverage unit 11 : the actuation of the dosing means 112, the water pump 14, the whipping means 114 and,
- during the dispensing of the first beverage component, in the flavour unit 13 : at least one of the dosing means 1310, 1320 or 1330 of the flavour unit to dispense a flavoured first component in the drinking cup.

Then, the control unit sequentially controls :
- in the second beverage unit 12 : the actuation of the dosing means 112, the water pump 14, the whipping means 114 and
- during the dispensing of the second beverage component, in the flavour unit 13 : at least one of the dosing means 1340, 1350 or 1360 of the flavour unit to dispense a flavoured second component in the drinking cup. Yet at least one of the actuated dosing means 1310, 1320 or 1330 of the flavour unit is different from the dosing means actuated during the preparation of the first beverage component.

The apparatus enables the preparation of layered beverages like cappuccino. In order to prepare such a beverage, in a first step, the first beverage unit is activated in order to deliver a mixture of liquid milk and milk foam in the container 16. Foamed milk was prepared by whipping 15,7 g of skimmed milk powder with 129 ml of hot water.

The foamed milk preferably presented a gas volume fraction comprised between 63 and 37 % in weight measured 30 sec after dispensing and comprised between 69 and 70 % in weight measured 2 min. after dispensing. Each measure was repeated 2 times according to the following method.

The gas volume fraction of the foam was measured by dispensing foamed milk in a cup, after 30 seconds, respectively 2 min., taking sample of foam only and filling therewith a defined container. The weight of the foam sample m_{foam} was measured. The same defined container was then filled with milk liquid dispensed from the apparatus but non foamed and its weight m_{liquid} is measured. The mass fraction was deduced by the following formula : (m_{liquid} - m_{foam}) / m_{liquid}.

The milk foam preferably presented a foam height of about 20 mm measured 30 sec after dispensing in a cylindrical container of 250 ml and diameter of 57 mm.

The milk foam presented a yield stress of 12,363 Pa measured with a rheometer Discovery HR2 from TA Instruments using a vane rotor as a mobile.

An additional flavour, for example rhubarb, is introduced in the flow of foamed milk flowing out of the outlet of the first beverage unit. The dispensing of this additional flavour starts after the beginning of the dispensing of the foamed milk and stops before the end of the dispensing of the foamed milk. Accordingly this flavour is efficiently mixed with the foamed milk. The quantity of flavour depends on the concentration of the flavour used. The quantity shall be sufficient to be perceived during drinking.

In a second step, the second beverage unit is activated in order to deliver liquid coffee in the container 16.

Another additional flavour, for example green apple, is introduced in the flow of coffee flowing out of the outlet of the first beverage unit. The dispensing of this additional flavour starts after the beginning of the dispensing of coffee and stops before the end of the dispensing of coffee. Accordingly this flavour is efficiently mixed with coffee. The quantity of flavour depends on the concentration of the flavour used. The quantity shall be sufficient to be perceived during drinking.

In the drinking container, flavoured coffee falls through the layer of milk foam to the bottom of the container and mixes with liquid milk at the bottom. Milk foam does not retain coffee. The flavour of the milk foam is not impacted by the flow of coffee flowing therethrough. Accordingly, the drinking container 16 comprises :
- a top layer 161 comprising milk foam flavoured with the rhubarb flavour introduced with foaming milk only,
- a bottom layer 162 comprising a mixture of coffee and milk flavoured with rhubarb and green apple flavours introduced with foaming milk and coffee.

Then the layers comprises beverage of different natures (liquid versus foam) and tastes (milk versus coffee and milk) and flavoured differently (the liquid mixture of coffee and milk comprises green apple flavour that is not present in the milk foam layer).

As an example, a latte macchiato beverage was prepared with a dispenser such as described above as follows :
- 15,7 g of skimmed milk powder was whipped with 129 ml of hot water in the first mixing chamber and dispensed in the container 16. As soon as foam milk was dispensed, 0,05 ml of rhubarb flavour was dispensed in the flow of foamed milk. Due to the large quantity of foamed milk produced and its long dispensing, another shot of 0.05 ml of rhubarb flavour was dispensed 5 seconds later in the flow of foamed milk.

The dispensing time for the flavour was very short since it is two shots of 0,05 ml only.

Accordingly the dispensing of the rhubarb flavour occurred before the end of the coffee dispensing.
- 10 seconds after the end of the preparation of the foamed milk, 2,2 g of soluble coffee was whipped with 55 ml of hot water in the first mixing chamber and dispensed in the container 16 through the milk foam. As soon as coffee was dispensed, 0,1 ml of green apple flavour was dispensed in the flow of coffee. The dispensing time was very short since it is a shot of 0,1 ml. Accordingly the dispensing of the green apple flavour occurred before the end of the coffee dispensing.

Flavoured coffee flows through the layer of milk foam and floats between said layer of milk foam and a layer a milk at the bottom of the container.

During drinking, the consumer discovers successively different flavours of the layers. Surprisingly, in a latte macchiato, even if liquid milk mixes with coffee under the top milk foam layer, the rhubarb flavour added with milk is not perceived by the consumer when he/she drinks the layer of coffee. Consequently the consumer perceives separately :
- the milk foam and its associated rhubarb flavour, and
- the mixture of coffee and milk with the green apple flavour that was introduced in coffee flow only. The effect is surprising and not expected.

This surprising effect was noticed with all flavoured beverages made of a top layer of milk foam and a liquid layer of coffee associated with other flavours like the latte macchiato beverages with the following association of flavours :
- coffee flavoured with coconut and foamed milk with passion fruit,
- coffee flavoured with caramel and foamed milk with orange,
- coffee flavoured with chai spices and foamed milk with mango.

Finally, due to the fact that the flavours are preferably associated by foodpairing in view of the beverage components used to prepare the beverage (that is coffee and milk) and in view of the combination of the selected flavours together (that is for example green apple and rhubarb), the final beverage taste is particularly pleasant for the consumer and different from what he/she would have expected from his/her choice of the flavours.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

### List of references in the drawings :

- beverage dispensing apparatus: 1
- first beverage unit: 11
- storing container: 111
- dosing means: 112
- mixing chamber: 113
- motor: 114
- diluent inlet: 115
- outlet: 116
- second beverage unit: 12
- storing container: 121
- dosing means: 122
- mixing chamber: 123
- motor: 124
- diluent inlet: 125
- outlet: 126
- flavour unit: 13
- flavour containers: 131, 132, 133, 134, 135, 136
- pumps: 1310, 1320, 1330, 1340, 1350, 1360
- nozzles: 1311, 1361
- control unit: 15
- container: 16
- top layer: 161
- bottom layer: 162
- pump: 17
- valve: 18

## Claims

1. Process of preparation of a beverage, said beverage being composed of at least two different layers, said layers presenting different densities, said process comprising the steps of separately preparing and successively delivering in one drinking container different beverage components,
wherein, for each beverage component, during the preparation or the delivery of each beverage component, at least one additional flavour is introduced in the beverage component, and
wherein, for each beverage component, at least one additional flavour introduced in said beverage component is different from the additional flavour(s) introduced in the other beverage component(s).

2. Process according to Claim 1, wherein the beverage comprises at least two different layers, the top layer being a foam and the lower layer(s) being liquid.

3. Process according to the precedent claim, wherein said process comprises the steps of preparing at least two beverage components, one first beverage component being at least partially foamed and the other beverage component(s) being liquid.

4. Process according to the precedent claim, wherein the first beverage component comprising the foam is dispensed first in the drinking container.

5. Process according to any one of the precedent claims, wherein the at least one additional flavour introduced in each beverage component is selected in a list of additional flavours compatible with said beverage component by foodpairing.

6. Process according to any one of the precedent claims, wherein the different additional flavours introduced in the different beverage components of a same beverage are compatible one with the others by foodpairing.

7. Process according to any one of the precedent claims, wherein the beverage comprises at least one layer of milk foam and said milk foam dense and thick to prevent a flow of coffee from mixing with milk foam during the introduction of said coffee in foamed milk.

8. Process according to any one of the precedent claims, wherein the beverage comprises at least one layer of milk foam, said milk foam being produced by mechanical whipping or steam foaming.

9. Process according to any one of the precedent claims, wherein the beverage comprises at least one layer of milk foam and said milk foam presents :
- a gas volume fraction of at least 60 % in weight,
- a yield stress of at least 9 Pa,
- a height of foam of at least 15 mm.

10. Process according to any one of the precedent claims, wherein the beverage is selected in the list of cappuccino, latte macchiato, chocolate with top layer of milk foam.

11. Beverage comprising at least two different layers, preferably two only, said layers differing by their densities and their beverage compositions and said layers comprising additional flavours, wherein the layers differ by the presence at least one different additional flavour.

12. Beverage according to the precedent claim, wherein the different additional flavours of the different layers are compatible one with the others by foodpairing and wherein the additional flavours are selected in a list of additional flavours compatible with said beverage component by foodpairing.

13. Apparatus (1) for preparing a beverage, said beverage being composed of at least two different layers, said layers presenting different densities,
said apparatus comprising :
- a first beverage unit (11) for preparing a first beverage component, preferably foamed milk, and dispensing a flow of said first beverage component in a drinking cup (16),
- a second beverage unit (12) for preparing a second beverage component, preferably coffee, and dispensing a flow of said second beverage component in said drinking cup (16),
- a flavour unit (13) comprising a plurality of additional flavours storing units (131, 132, 133), corresponding pumping means (1310, 1320, 1330) and lines for dispensing said additional flavours separately, said dispensing lines being configured for dispensing the additional flavours in the flows of the first or the second beverage component,
- a control unit (15) controlling the first beverage unit (11), the second beverage unit (12) and the flavour unit (13) so that:
. when the first beverage component is dispensed in the drinking cup, at least one first additional flavour is introduced in the flow of said first beverage component, then
. when the second beverage component is dispensed in the drinking cup, at least one second additional flavour is introduced in the flow of said second beverage component, wherein said at least one of the second additional flavour is different from said at least one of the first additional flavour.

14. Apparatus according to Claim 13, wherein the flavour unit (13) comprises nozzles at the outlet of the lines dispensing the additional flavours, wherein said nozzles are oriented in order to dispense drops of additional flavours inside the flows of the beverage components.

15. Apparatus according to Claim 13 or 14, wherein the first beverage unit (11) is comprised in the list of :
- a milk beverage unit configured for foaming milk with steam,
- a milk beverage unit comprising a mixing bowl and a mechanical whipper to whip milk or a mixture of milk powder or milk concentrate with water.
